# EUROPEAN PATENT APPLICATION

(11) **EP 2 381 221 A2**
(43) Date of publication of application: **26.10.2011**
(21) Application number: 11154866.5
(22) Date of filing: 17.02.2011
(51) Int. Cl.: G01C 23/00

(54) **Methods And Systems Involving Viewing Angles In Aircraft Displays**

(30) Priority: 20.04.2010 US 325948 P
(71) Applicant: Sikorsky Aircraft Corporation, Stratford, CT 06615-9129 (US)
(72) Inventor: Lampazzi, Margaret M., Woodbury, CT 06798 (US); Stiles, Lorren, Pam City, FL 34990 (US); Salvetti, Jena D., Owens Cross Road, AL 35763 (US); He, Gang, Morristown, NJ 07960 (US)
(74) Representative: Klunker . Schmitt-Nilson . Hirsch

(57) **Abstract**

A method and system for presenting environmental data including receiving environmental data from a sensor, processing the data to generate a graphical representation of the environment, wherein the view point of the graphical representation of the environment is a distance (d) and an angle (θ) relative to a point in an aircraft, and presenting the graphical representation of the environment to a user on a display.

## Description

### CROSS REFERENCE TO RELATED APPLICATIONS

This application claims the benefit of U.S. Provisional Application No. 61/325,948, filed April 20, 2010.

### FEDERAL RESEARCH STATEMENT

This invention was made with Government support under Government Contract #W31P4Q-07-C-0182 awarded by Defense Advanced Research Projects Agency. The Government has certain rights in this invention.

### BACKGROUND OF THE INVENTION

The subject matter disclosed herein relates to systems and methods involving aircraft control. Many aircraft include displays that present visual representations of the surrounding environment. These representations are particularly useful during low visibility operations. In landing operations, a visual representation of the surrounding environment from the perspective of a pilot may not provide sufficient information for a pilot to effectively and safely land the aircraft.

### BRIEF DESCRIPTION OF THE INVENTION

According to one aspect of the invention, a method for presenting environmental data includes receiving environmental data from a sensor, processing the data to generate a graphical representation of the environment, wherein the view point of the graphical representation of the environment is a distance (d) and an angle (θ) relative to a point in an aircraft, and presenting the graphical representation of the environment to a user on a display.

According to another aspect of the invention, a system for presenting environmental data includes a sensor operative to sense environmental data, a display, and a processor operative to receive environmental data from the sensor, generate a graphical representation of the environment, wherein the view point of the graphical representation of the environment is a distance (d) and an angle (θ) relative to a point in an aircraft, and output the graphical representation of the environment to the display.

According to yet another aspect of the invention, a computer program product for presenting environmental data, the computer program product having a storage medium readable by a processing circuit and operative to store instructions for execution by the processing circuit for implementing the method including receiving environmental data from a sensor, processing the data to generate a graphical representation of the environment, wherein the view point of the graphical representation of the environment is a distance (d) and an angle (θ) relative to a point in an aircraft, and presenting the graphical representation of the environment to a user on a display.

Further embodiments of the invention are set out in the following numbered paragraphs:
1. A method for presenting environmental data comprising:
   receiving environmental data from a sensor;
   processing the data to generate a graphical representation of the environment, wherein the view point of the graphical representation of the environment is a distance (d) and an angle (θ) relative to a point in an aircraft; and
   presenting the graphical representation of the environment to a user on a display.
2. The method of paragraph 1, wherein the distance (d) is between 30 meters and 100 meters.
3. The method of paragraph 1 or 2, wherein the angle (θ) is between 3 degrees and 30 degrees.
4. The method of any of the preceding paragraphs, wherein the graphical representation of the environment includes a graphical representation of the aircraft.
5. The method of any of the preceding paragraphs, wherein the graphical representation of the environment includes a graphical representation of a ground and obstacles present on the ground.
6. The method of any of the preceding paragraphs, wherein the graphical representation of the environment includes a graphical representation of a landing area.
7. The method of any of the preceding paragraphs, wherein the user is an aircraft operator.
8. The method of any of the preceding paragraphs, wherein the point in the aircraft is a point in a cockpit of the aircraft.
9. A system for presenting environmental data comprising:
   a sensor operative to sense environmental data;
   a display; and
   a processor operative to receive environmental data from the sensor, generate a graphical representation of the environment, wherein the view point of the graphical representation of the environment is a distance (d) and an angle (θ) relative to a point in an aircraft, and output the graphical representation of the environment to the display.
10. The system of paragraph 9, wherein the distance (d) is between 30 meters and 100 meters.
11. The system of paragraph 9 or 10, wherein the angle (θ) is between 3 degrees and 30 degrees.
12. The system of any of paragraphs 9 to 11, wherein the graphical representation of the environment includes a graphical representation of the aircraft.
13. The system of any of paragraphs 9 to 12, wherein the graphical representation of the environment includes a graphical representation of a ground and obstacles present on the ground.
14. The system of any of paragraphs 9 to 13, wherein the graphical representation of the environment includes a graphical representation of a landing area.
15. The system of any of paragraphs 9 to 14, wherein the user is an aircraft operator.
16. The system of any of paragraphs 9 to 15, wherein the point in the aircraft is a point in a cockpit of the aircraft.
17. The system of any of paragraphs 9 to 16, wherein the sensor is a radar device.
18. A computer program product for presenting environmental data, the computer program product comprising a storage medium readable by a processing circuit and operative to store instructions for execution by the processing circuit for implementing the method comprising:
   receiving environmental data from a sensor;
   processing the data to generate a graphical representation of the environment, wherein the view point of the graphical representation of the environment is a distance (d) and an angle (θ) relative to a point in an aircraft; and
   presenting the graphical representation of the environment to a user on a display.
19. The computer program product of paragraph 18, wherein the distance (d) is between 30 meters and 100 meters.
20. The computer program product of paragraph 18 or 19, wherein the angle (θ) is between 3 degrees and 30 degrees.

These and other advantages and features will become more apparent from the following description taken in conjunction with the drawings.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:

FIG. 1 illustrates an example of an aircraft approaching a landing area.

FIG. 2 illustrates another example of the aircraft approaching the landing area.

FIG. 3 illustrates an exemplary embodiment of a system of the aircraft.

FIG. 4 illustrates an exemplary embodiment of an image output by the system of FIG. 3.

FIG. 5 illustrates a side view of the aircraft.

FIG. 6 illustrates another exemplary embodiment of an image of the system of FIG. 3.

The detailed description explains embodiments of the invention, together with advantages and features, by way of example with reference to the drawings.

### DETAILED DESCRIPTION OF THE INVENTION

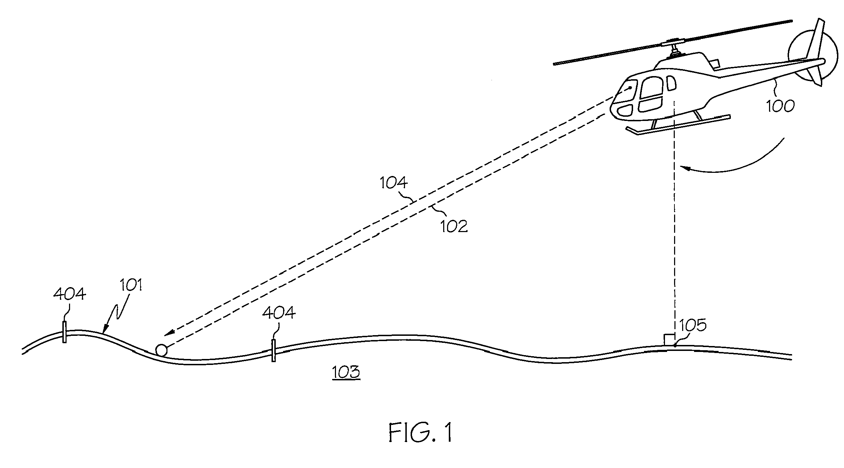

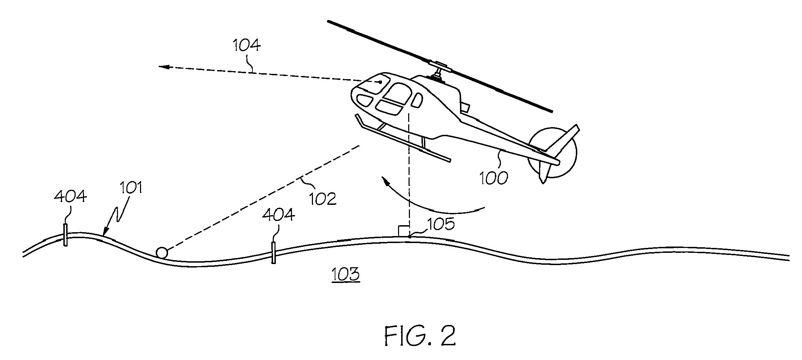

FIG. 1 illustrates an example of an aircraft 100 approaching a landing area 101 on a surface 103 defined by a circular line 404. The aircraft 100 is following a path 102. The point 105 illustrates the position of the aircraft relative to the surface 103. An operator or user in the aircraft 100 has a line of sight 104 that allows the operator to view the landing area 101. FIG. 2 illustrates the aircraft 100 as the aircraft 100 has descended closer to the landing area 101 along the path 102. The aircraft 100 has pitched up for landing; and the pitch of the aircraft has increased the angle of the line of sight 104 such that the operator cannot view the entire landing area 101. Methods and systems that allow an aircraft operator to view the landing area 101 while the aircraft is disposed at various angles are described below.

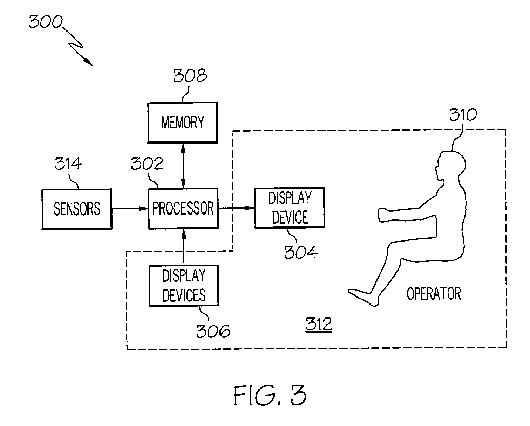

FIG. 3 illustrates an exemplary embodiment of a control system 300 of the aircraft 100 (of FIG. 1). The aircraft 100 may include any type of aircraft such as, for example, a rotary or fixed wing aircraft. The aircraft 100 may be operated by, for example, an operator 310 in the aircraft 100 or an operator in a remote location. The system 300 includes a control area 312 having input devices 306 and a display device 304. The system 300 also includes a processor 302 communicatively connected to a memory 308, the display device 304, input devices 306, and sensors 314. The sensors 314 may include, for example, accelerometers, gyro-devices devices, or imaging devices such as radar, lasers, sonar, or other types of imaging devices including terrain data that is stored in the memory 308.

In operation, the operator 310 is presented with an image of the surrounding environment on the display device 304. The image may be rendered from, for example imaging data from the sensor 314.

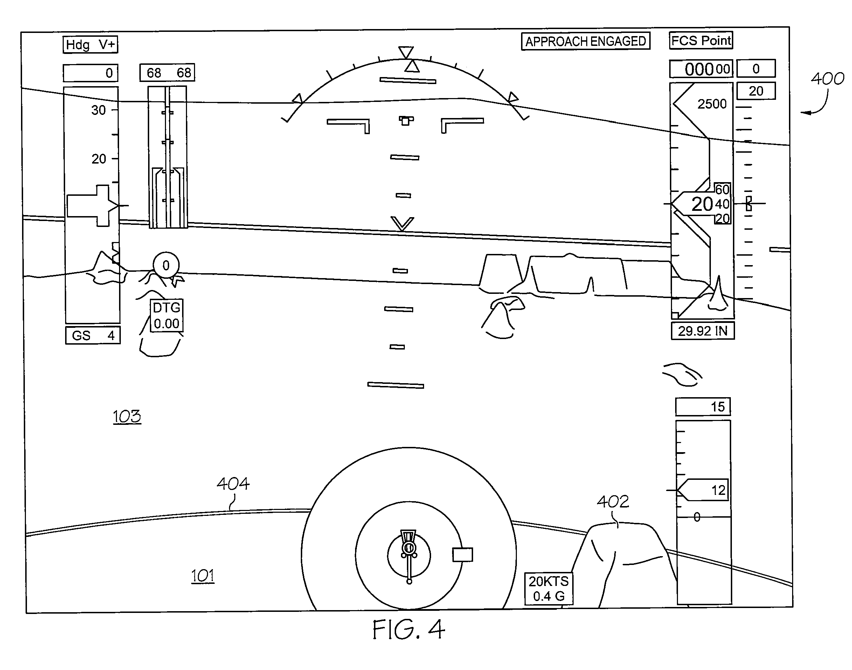

FIG. 4 illustrates an exemplary embodiment of an image 400 that may be presented to the operator 310 (of FIG. 3) in the display device 304 (of FIG. 3). The image 400 depicts the environment in real time from the perspective of the position of the operator 310 as if the operator were in the cockpit of the aircraft 100 and viewing the environment through a canopy of the aircraft. The image 400 includes a variety of flight data and a representation of the surface 103 having a variety of obstacles 402. The landing area 101 is defined by a circular line 404. In the illustrated image 400, portions of the landing area 101 are not shown to the operator 310.

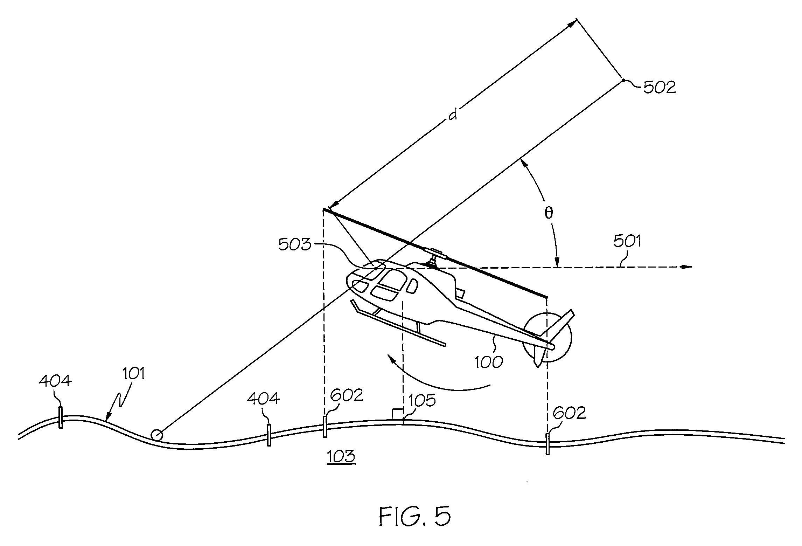

FIG. 5 illustrates a side view of the aircraft 100, landing area 101, and the circular line 404. A view point 502 is shown that is a distance (d) at an angle (θ) relative to a horizontal line 501 from a reference point 503 in the aircraft 100. In operation, the processor 302 receives image data from the sensors 314. The processor 302 processes the image data from the sensors 314 and displays the image data in the display device 304 from the view point 502 that is outside of the aircraft 100. The resultant image from the view point 502 depicts a graphical representation of the aircraft 100 and the surrounding environment including the landing area 101 and the circular line 404, the position of the aircraft 100 relative to the surface 103 shown by point 105, and the position of the circumference of the main rotor of the aircraft 100 relative to the surface 103 represented by a circular line 602. Moving the viewpoint of the operator to the view point 502 allows the operator 310 to view the location of the landing area 101 and determine whether undesirable obstructions are present in the landing area, and view the location of the aircraft 100 relative to the landing area. In the illustrated embodiment, the distance (d) is between 30 and 100 meters from the reference point 503 and the angle (θ) is between 3 degrees and 30 degrees; however any distance (d) or angle (θ) may be used.

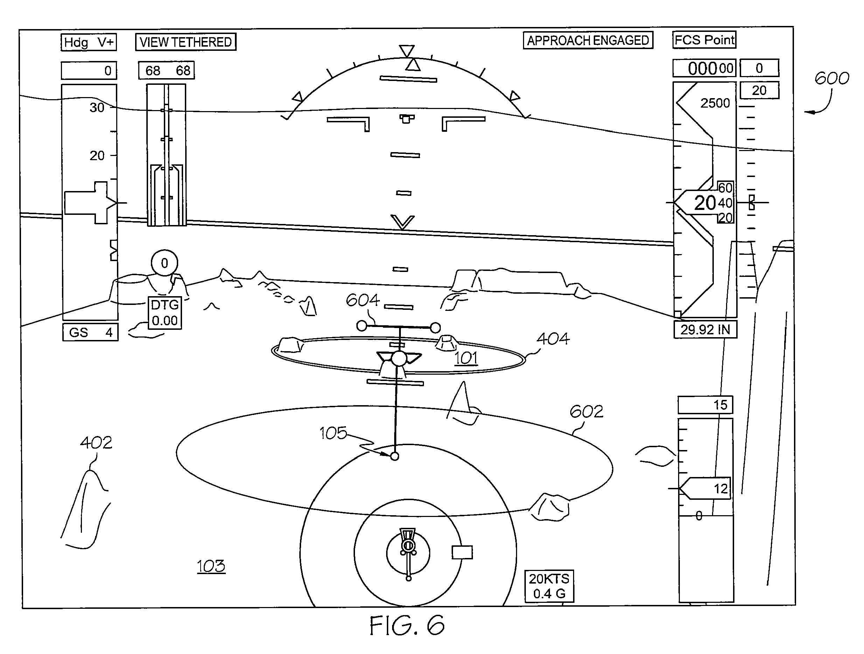

FIG. 6 illustrates an exemplary embodiment of an image 600 that may be presented to the operator 310 in the display 304. The image 600 is shown from the view point 502 (of FIG. 5) as if the operator 310 is positioned at the view point 502. The image 600 includes a graphical depiction of the aircraft 100 shown by the T-shape 604, a graphical depiction of the circumference of a main rotor of the aircraft 100 shown by the circular line 602, a graphical depiction of the position of the aircraft 100 over the surface 103 (point 105), and the landing area 101 defined by the circular line 404. The circular lines 602 and 404 are conformable to the contours and features of the surface 103.

Example embodiments of the present invention may be implemented, in software, for example, as any suitable computer program. For example, a program in accordance with one or more example embodiments of the present invention may be a computer program product causing a computer to execute one or more of the example methods described herein: a method for simulating arbitrary software and/or unmodified code directly on a host processor.

The computer program product may include a computer-readable medium having computer program logic or code portions embodied thereon for enabling a processor of the apparatus to perform one or more functions in accordance with one or more of the example methodologies described above. The computer program logic may thus cause the processor to perform one or more of the example methodologies, or one or more functions of a given methodology described herein.

The computer-readable storage medium may be a built-in medium installed inside a computer main body or removable medium arranged so that it can be separated from the computer main body. Examples of the built-in medium include, but are not limited to, rewriteable non-volatile memories, such as RAMs, ROMs, flash memories, and hard disks. Examples of a removable medium may include, but are not limited to, optical storage media such as CD-ROMs and DVDs; magneto-optical storage media such as MOs; magnetism storage media such as floppy disks (trademark), cassette tapes, and removable hard disks; media with a built-in rewriteable non-volatile memory such as memory cards; and media with a built-in ROM, such as ROM cassettes.

These programs may also be provided in the form of an externally supplied propagated signal and/or a computer data signal (e.g., wireless or terrestrial) embodied in a carrier wave. The computer data signal embodying one or more instructions or functions of an example methodology may be carried on a carrier wave for transmission and/or reception by an entity that executes the instructions or functions of the example methodology. For example, the functions or instructions of the example embodiments may be implemented by processing one or more code segments of the carrier wave, for example, in a computer, where instructions or functions may be executed for simulating arbitrary software and/or unmodified code directly on a host processor, in accordance with example embodiments of the present invention.

Further, such programs, when recorded on computer-readable storage media, may be readily stored and distributed. The storage medium, as it is read by a computer, may enable the simulation of arbitrary software and/or unmodified code directly on a host processor, in accordance with the example embodiments of the present invention.

Example embodiments of the present invention being thus described, it will be obvious that the same may be varied in many ways. For example, the methods according to example embodiments of the present invention may be implemented in hardware and/or software. The hardware/software implementations may include a combination of processor(s) and article(s) of manufacture. The article(s) of manufacture may further include storage media and executable computer program(s), for example, a computer program product stored on a computer readable medium.

The executable computer program(s) may include the instructions to perform the described operations or functions. The computer executable program(s) may also be provided as part of externally supplied propagated signal(s). Such variations are not to be regarded as a departure from the spirit and scope of the example embodiments of the present invention, and all such modifications as would be obvious to one skilled in the art are intended to be included within the scope of the following claims.

Although example embodiments of the present invention have been discussed herein with regard to specific applications and/or implementations, it will be understood that example embodiments may be utilized in, for example, in firm ASIC chip design or implemented in traditional circuitry.

Although example embodiments of the present invention have been shown and described with regard to certain operations being performed serially or consecutively, it will be understood that any combination of these operations may be performed simultaneously and in parallel.

Although specific aspects may be associated with specific example embodiments of the present invention, as described herein, it will be understood that the aspects of the example embodiments, as described herein, may be combined in any suitable manner.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A system for presenting environmental data comprising:
a sensor operative to sense environmental data;
a display; and
a processor operative to receive environmental data from the sensor, generate a graphical representation of the environment, wherein the view point of the graphical representation of the environment is a distance (d) and an angle (θ) relative to a point in an aircraft, and output the graphical representation of the environment to the display.

2. The system of claim 1, wherein the distance (d) is between 30 meters and 100 meters.

3. The system of claim 1 or 2, wherein the angle (θ) is between 3 degrees and 30 degrees.

4. The system of any of the preceding claims, wherein the graphical representation of the environment includes a graphical representation of the aircraft.

5. The system of any of the preceding claims, wherein the graphical representation of the environment includes a graphical representation of a ground and obstacles present on the ground.

6. The system of any of the preceding claims, wherein the graphical representation of the environment includes a graphical representation of a landing area.

7. The system of any of the preceding claims, wherein the user is an aircraft operator.

8. The system of any of the preceding claims, wherein the point in the aircraft is a point in a cockpit of the aircraft.

9. The system of any of the preceding claims, wherein the sensor is a radar device.
